(19) **Europäisches Patentamt**
**European Patent Office**
**Office européen des brevets**

(11) **EP 0 759 438 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(51) Int Cl.$^7$: **C07F 7/16**

(21) Anmeldenummer: **96113157.0**

(22) Anmeldetag: **16.08.1996**

(54) **Verfahren zur Herstellung von Dimethyldichlorsilan**

Process for preparing dimethyldichlorosilane

Procédé de préparation de diméthyldichlorosilane

(84) Benannte Vertragsstaaten:
**DE ES FR GB**

(30) Priorität: **17.08.1995 DE 19530292**

(43) Veröffentlichungstag der Anmeldung:
**26.02.1997 Patentblatt 1997/09**

(73) Patentinhaber: **Wacker-Chemie GmbH**
**81737 München (DE)**

(72) Erfinder: **Kalchauer, Wilfried, Dr.**
**84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 191 502       EP-A- 0 348 902**
**US-A- 4 500 724**

- **COLLECTION CZECHOSLOV. CHEM. COMMUN., Bd. 38, 1973, Seiten 3176-3180, XP002015287 JOKLIK, J. ET AL.: "ORGANOSILICON COMPOUNDS. CII. DIRECT SYNTHESIS OF METHYLCHLOROSILANES IN THE PRESENCE OF METHYLDICHLOROSILANE OR TOLUENE"**

**Beschreibung**

Die Erfindung betrifft ein Verfahren zur Herstellung von Methylchlorsilanen durch Umsetzung von Chlormethan mit Silicium, bei dem durch Einleitung von Aktivatoren eine hohe Selektivität bezüglich Dimethyldichlorsilan erreicht wird.

Verfahren zur Herstellung von Methylchlorsilanen durch Umsetzung von Silicium mit Chlormethan (Direktsynthese) in Gegenwart von geeigneten Katalysatoren und Katalysatorkombinationen sind bereits bekannt. Beispielsweise ist in US-Re. 33,452 ein Direktsyntheseverfahren mit einer Katalysatorkombination aus den Elementen oder den Verbindungen von Kupfer, Zink und Zinn beschrieben. Das Mengenverhältnis der Katalysatoren Kupfer, Zink und Zinn zueinander hat in dem Verfahren einen starken Einfluß auf das Verfahren, insbesondere auf die Produktivität und die Selektivität, während die Form, wie Metall, Legierungen oder Verbindungen, in der die Katalysatoren in die Kontaktmasse eingebracht werden, von untergeordneter Bedeutung ist.

K. A. Magrini et al.; J. Phys. Chem. 93, 1989, 5563, beschreiben die Aktivierung von kupferbedampften Oberflächen von reinem polykristallinen Silicium mit einem Trichlorsilan/Chlormethangemisch. Bei der folgenden Umsetzung mit reinem Chlormethan wird eine höhere Selektivität bezüglich Dimethylchlorsilan, Methyldichlorsilan und Methyltrichlorsilan erreicht. Der Anteil an Dimethyldichlorsilan nimmt ab.

In US-A-4,973,725 ist ein Direktsyntheseverfahren zur selektiven Herstellung von Organohalohydrosilanen beschrieben, bei dem das in den Reaktor eingespeiste Gas mindestens 20 Volumen-% an Wasserstoff und als Aktivator ein Organohalosilan oder Organohalohydrosilan enthält.

Aufgabe der Erfindung war es, ein Verfahren zur Herstellung von Methylchlorsilanen durch Umsetzung von Chlormethan mit Silicium bereitzustellen, wobei bei diesem Verfahren unabhängig von der Zusammensetzung des Katalysators eine relativ hohe Produktionsrate und eine relativ hohe Selektivität an Dimethyldichlorsilan angestrebt wird.

Gegenstand der Erfindung ist ein Verfahren zur Herstellung von Dimethyldichlorsilan durch Umsetzung von Chlormethan mit Silicium in Gegenwart einer Katalysatorkombination aus den Metallen oder Verbindungen der Metalle

a) Kupfer,
b) Zink und
c) Zinn und/oder Antimon,

bei dem Aktivatoren eingespeist werden, die ausgewählt werden aus Chlorsilanen der allgemeinen Formel (I)

$$(H_3C)_a SiH_b Cl_c \tag{I},$$

in der

**a** und **b** unabhängig voneinander die Werte 0, 1, 2 oder 3 und
**c** die Werte 1, 2, 3 oder 4 bedeuten,

und aus Chlordisilanen der allgemeinen Formel (II)

$$(H_3C)_d H_e Cl_f Si\text{-}Si(H_3C)_g H_h Cl_i \tag{II},$$

in der

**d** und **e** unabhängig voneinander die Werte 0, 1 oder 2,
**f** die Werte 1, 2 oder 3 und
**g**, **h** und **i** unabhängig voneinander die Werte 0, 1, 2 oder 3 bedeuten,

mit der Maßgabe, daß das in den Reaktor eingespeiste Gas höchstens 15 Volumen-% Wasserstoff enthält.

Die vorliegende Erfindung beruht auf der Erkenntnis, daß die Produktionsraten von Dimethyldichlorsilan bei Verwendung der vorstehenden Katalysatorkombination in Gegenwart von wenig Wasserstoff durch Einleiten von Katalysatoraktivatoren gesteigert werden kann.

Vorzugsweise enthält das in den Reaktor eingespeiste Gas mindestens 0,05, insbesondere 0,1, besser 0,5 Volumen-% Aktivator und höchstens 5, insbesondere 2 Volumen-% Aktivator, jeweils berechnet als gasförmiger Aktivator.

Es können aber auch kleinere und größere Volumenanteile an Aktivatoren zum Einsatz kommen, wobei bei geringeren Mengen die Steigerung der Produktionsraten von Dimethyldichlorsilan geringer ausfällt. Höhere Aktivatoranteile bewirken keine nennenswerte Steigerung der Produktionsraten.

Das Verfahren wird bevorzugt in einem Wirbelschichtreaktor, vorzugsweise im Temperaturbereich von 250 bis 400 °C, insbesondere bei 250 bis 360 °C durchgeführt. Weil dies den geringsten Aufwand erfordert, wird das Verfahren meist beim Druck der umgebenen Atmosphäre (also bei etwa 0,1 MPa) bis 0,5 MPa durchgeführt, es können aber auch höhere Drücke angewandt werden.

Das Verfahren kann mit reinem Chlormethan und Aktivator oder Mischungen aus Chlormethan, Aktivator und Inertgas durchgeführt werden, als Inertgas können beispielsweise Stickstoff oder Argon eingesetzt werden. Vorzugsweise wird kein Inertgas verwendet.

Die Menge des Gasstromes wird in einer bevorzugten Ausführungsform so gewählt, daß im Reaktor eine Wirbelschicht aus Kontaktmasse und Gas gebildet wird. Die Mischung aus Silicium und Katalysatoren wird als Kontaktmasse bezeichnet. Nicht umgesetztes Chlormethan und gegebenenfalls Inertgas und die gasförmigen Methylchlorsilane verlassen den Reaktor. Über einen oder mehrere Cyclone kann man, falls erwünscht, die mitgerissenen Partikel vom Gasstrom abtrennen, wobei große mitgerissene Partikel aus der Kontaktmasse wieder in den Reaktor zurückgeführt werden. Das Silan wird anschließend von restlichen Staubanteilen und nicht umgesetztem Chlormethan abgetrennt und einer Destillation zugeführt. Gereinigtes, nicht umgesetztes Chlormethan kann wieder in den Reaktor eingespeist werden.

Die Einleitung des Gasstroms in den Reaktor kann beispielsweise derart erfolgen, daß das Chlormethan und der Aktivator über getrennte Leitungen in den Reaktor eingebracht werden, oder daß der Aktivator dem Chlormethan gezielt vor dem Einblasen in den Reaktor zugesetzt wird, oder daß ein aktivatorhaltiges Kreislauf-Chlormethan eingesetzt wird.

Als Kreislauf-Chlormethan bezeichnet man jenes Chlormethan, das in den Reaktor zum Aufbau der Wirbelschicht eingeblasen, aber nicht umgesetzt wird. Im Anschluß daran werden mitgerissene feste Verunreinigungen wie auch die bei der Reaktion gebildeten Produkte, wie Silane und Kohlenwasserstoffe, abgetrennt und das Chlormethan wieder in den Reaktor eingebracht.

Als Aktivatoren werden Verbindungen eingesetzt, die bei der Direktsynthese selbst gebildet werden. Dies hat den Vorteil, daß bei der destillativen Rohsilan-Aufarbeitung keine neuen Verbindungen anfallen, die eine Änderung des Kolonnenaufbaus bzw. Destillationskonzeptes erfordern würden, daß diese Verbindungen leicht verfügbar sind und daß der Einsatz von teilgereinigtem Kreislauf-Chlormethan möglich ist. Die Aktivatoren können als Reinsubstanzen oder auch als Gemische verschiedener Aktivatoren, die gegebenenfalls mit Inertgasen, wie Stickstoff oder mit Kohlenwasserstoffen, die bei der Direktsynthese entstehen, verunreinigt sein können, eingesetzt werden.

Die Zubereitung der Kontaktmasse erfolgt durch einfaches Mischen der Einzelkomponenten bei Raumtemperatur. Eine anschließende thermische Behandlung der Kontaktmasse vor dem Einbringen in den Reaktionsreaktor ist möglich, wird aber in der bevorzugten Ausführungsform nicht durchgeführt.

Das Verfahren kann kontinuierlich oder diskontinuierlich durchgeführt werden. Kontinuierlich bedeutet, daß die Mengen an abreagiertem Silicium und mit dem Reaktionstaub ausgetragene Katalysatoren kontinuierlich nachdosiert werden, vorzugsweise als vorgemischte Kontaktmasse.

Wenn im Reaktor eine Wirbelschicht gebildet wird, ist die Zudosierung der Aktivatoren in der Startphase am wichtigsten, da zu Beginn die eingesetzten Katalysatoren aktiviert werden und während der Produktionsphase ausreichend Aktivatoren zur Aktivierung im Reaktor vorhanden sind. Bei Reaktorformen, bei denen an einer Stelle frische Kontaktmasse und frisches Chlormethan eindosiert und nicht mit bereits reagierender Reaktionsmischung vermischt werden ist die Zudosierung von Aktivator während der gesamten Reaktionsdauer vorteilhaft.

Beim erfindungsgemäßen Verfahren wird in einer bevorzugten Ausführungsform Silicium in einer Korngröße von kleiner 700 μm und größer 20 μm, besonders bevorzugt in einer Korngröße von kleiner 250 μm und größer 70 μm eingesetzt. Die durchschnittliche Korngröße der Siliciumpartikel liegt bevorzugt im Bereich von 100 bis 200 μm, besonders bevorzugt im Bereich von 130 bis 170 μm. Das eingesetzte Silicium weist üblicherweise einen Reinheitsgrad von >99 % auf.

Beim erfindungsgemäßen Verfahren wird a) Kupfer vorzugsweise in Form von Kupferoxid-Gemischen, in Form von Kupfer(II)oxid, in Form von CuCl oder in Form von $CuCl_2$ eingesetzt. Im Falle von Mischoxiden der allgemeinen Formel $CuO_x$ weist x einen Wert von 0,6 bis 1 auf, bevorzugt ist ein Wert von mindestens 0,7. Die eingesetzten Kupferoxide können einen geringen Anteil an Verunreinigungen wie beispielsweise Eisen, Blei, Zink, Aluminium, Titan, Alkali- oder Erdalkalimetalle oder Zinn aufweisen. Die Verunreinigungen überschreiten vorzugsweise in Summe nicht 3 Gew.-%, wobei die Gesamtkonzentration an Blei vorzugsweise höchstens 0,005 Gew.-% beträgt, die Gesamtkonzentration an Alkalimetallen und Erdalkalimetallen jeweils vorzugsweise höchstens 0,04 Gew.-%, die Gesamtkonzentration an Barium und Strontium vorzugsweise höchstens 0,008 Gew.-% beträgt. Die Kupferoxide werden vorzugsweise in einer Korngröße von kleiner 25 μm eingesetzt, wobei die durchschnittliche Korngröße im Bereich von 10 bis 0,1 μm,

bevorzugt im Bereich von 7 bis 1 µm und besonders bevorzugt im Bereich von 5 - 1 µm liegt. Die beschriebenen Kupferoxide können beispielsweise nach dem in US 5,306,328 beschriebenen Verfahren hergestellt werden, wobei der Oxidationsgrad durch die Trocknungstemperatur und die Verweilzeit bei dieser Temperatur gezielt eingestellt werden kann.

Vorzugsweise werden 0,5 bis 10 Gew.-%, insbesondere 0,7 bis 7 Gew.-% Kupferkatalysator, bezogen auf metallisches Kupfer und eingesetztes Silicium verwendet, besonders bevorzugt sind 1 bis 5 Gew.-%.

Beim erfindungsgemäßen Verfahren wird b) Zink vorzugsweise in Form von metallischem Zink, auch als Legierung mit Kupfer, Zinn und/oder Antimon, Zinkoxid, -carbonat, oder -chlorid eingesetzt. Das eingesetzte Zink weist vorzugsweise einen Gehalt von weniger als 0,005 Gew.-% Blei auf. Der Gesamtgehalt an Alkalimetallen und Erdalkalimetallen beträgt höchstens 0,04 Gew.-% und der Gesamtgehalt an Barium und Strontium höchstens 0,008 Gew.-%. Die Menge an eingesetztem Zink beträgt vorzugsweise 0,5 bis 60 Gew.-%, insbesondere 2 bis 40 Gew.-% Zn, bezogen auf Kupfer, besonders bevorzugt werden 5 bis 30 Gew.-% Zn eingesetzt.

Beim erfindungsgemäßen Verfahren werden Antimon und/oder Zinn vorzugsweise als Metalle eingesetzt. Vorzugsweise wird nur Antimon oder Zinn oder Verbindungen von Antimon oder Zinn eingesetzt. Wenn Antimon und/oder Zinn als Metalle eingesetzt werden, beträgt die Korngröße höchstens 150 µm. In einer bevorzugten Ausführungsform werden Antimon- oder Zinnpulver mit einer Korngröße von höchstens 45 µm verwendet. Die Menge an eingesetztem Antimon oder Zinn beträgt vorzugsweise 200 bis 8000 ppm, insbesondere 300 bis 4000 ppm, bezogen auf das eingesetzte Kupfer, besonders bevorzugt werden 500 bis 2500 ppm Antimon und/oder Zinn eingesetzt.

Die Art des eingesetzten Aktivators richtet sich vorzugsweise nach dem chemischen Aufbau des eingesetzten Zinkkatalysators.

Werden sauerstoffhaltige Zinkverbindungen, wie ZnO, $ZnCO_3$, eingesetzt, so werden Chlorsilane bevorzugt eingesetzt, die eine Si-H Bindung oder eine Si-Si Bindung aufweisen. Beispielsweise sind dies Trichlorsilan, Methyldichlorsilan, Dimethylchlorsilan, 1,1,2,2-Tetramethyldichlorsilan, 1,1,2-Trimethyltrichlordisilan und 1,2-Dimethyltetrachlordisilan. Besonders bevorzugt werden Chlorsilane, die eine Si-H Bindung und mindestens zwei Si-Cl Bindungen aufweisen, wie beispielsweise Methyldichlorsilan, eingesetzt.

Wird metallisches Zink, Zinklegierungen oder Zinkchlorid als Katalysator eingesetzt, so werden bevorzugt Silane eingesetzt, die mindestens zwei Si-Cl Bindungen aufweisen. Beispielsweise sind dies Trichlorsilan, Methyldichlorsilan, Methyltrichlorsilan, Tetrachlorsilan, Dimethyldichlorsilan, 1,1,2-Trichlortrimethyldisilan, 1,1,2,2-Tetrachlordimethyldisilan und 1,1-Dichlortetramethyldisilan.

Besonders bevorzugt werden Methyltrichlorsilan, Methyldichlorsilan und Dimethyldichlorsilan eingesetzt.

Vorzugsweise enthält das in den Reaktor eingespeiste Gas höchstens 10, insbesondere höchstens 5 Volumen-% Wasserstoff, da dieser nur zusätzliches Reaktorvolumen benötigt und die Selektivität bezüglich Dimethyldichlorsilan verschlechtern kann. Auch begünstigen hohe Konzentration an Wasserstoff die Versinterung der Katalysatoren und führen zur Desaktivierung.

## Beispiele

Die Ergebnisse bei Umsetzungen von Silicium mit Chlormethan in Gegenwart von geeigneten Katalysatoren hängen neben der Zusammensetzung und der Zubereitung der Kontaktmassen und den eingesetzten Aktivatoren auch vom Aufbau der Versuchsanlage und der Versuchsdurchführung ab. Um die beiden letztgenannten Parameter zu eliminieren und um die Vorteile der vorliegenden Erfindung eindeutig aufzeigen zu können, wurden alle in den Beispielen dargestellten Versuche nach folgender standardisierter Vorgehensweise durchgeführt.

Silicium:

Granulat der Fa. Lilleby Smelteverker, Norwegen Korngröße im Bereich von 70 - 350 µm.

Kupferoxid:

Hergestellt nach US-A 5,306,328, Beispiel 5.

Alle anderen eingesetzten Katalysatoren und Aktivatoren sind im Chemikalienhandel käuflich erhältlich, z.B. bei Fluka Chemie GmbH, Deutschland.

Versuchsanlage:

Labor-Wirbelschichtreaktor (senkrechtes Glasrohr mit einem Innendurchmesser von 25 mm und einer Höhe von 500 mm) mit Heizwicklung, Gasverteilungsfritte, Destillationsbrücke mit Solekühlung und Vorlagekolben.

Standardisierte Vorgehensweise:

Startphase: 120 g Silicium werden mit den Katalysatoren innig vermischt, in den Reaktor gefüllt und unter einem Stickstoffstrom von 40 l/h auf 340°C erwärmt. Anschließend werden 40 l/h Methylchlorid mit den entsprechenden Aktivatoren durch den Reaktor geleitet und die Kontaktmasse auf 395°C erwärmt. Nach einer Induktionszeit im Bereich von 20 - 30 Minuten beginnt die Silanbildung (Anspringzeit), die Reaktionstemperatur wird auf 360°C reduziert und 50 ml Methylchlorsilane werden aufgefangen.

Produktionsphase: Anschließend werden weitere 30 ml Methylchlorsilane gesammelt. Die Zeit zur Bildung dieser 30 ml Silane wird als Produktionsphase bezeichnet, die Produktionsrate (PR2) errechnet sich nach der Formel

$$PR2 = \frac{\text{mg Methylchlorsilane - mg zudosierte Aktivatoren}}{\text{Oberfläche des Siliciums x Minuten}}$$

Die Silanzusammensetzung der 30 ml Methylchlorsilane wurde mittels GC-Analyse in Gewichtsprozent ermittelt.

Vergleichsbeispiele 1 - 6 ohne Aktivator (nicht erfindungsgemäß):

Der Nachweis, daß die Produktivität sehr stark von der chemischen Form der Katalysatoren abhängt, wird erbracht. Die eingesetzten Katalysatorkomponenten in g sind in der Tabelle I angegeben.

Tabelle I

| Beisp. | $CuO_{0,9}$ | CuCl | Zn | $ZnCl_2$ | ZnO | Sn | Sb |
|--------|-------------|------|------|----------|------|-------|-------|
| 1 | 6,00 | | | | 1,00 | 0,008 | |
| 2 | 6,00 | | | | 1,00 | | 0,006 |
| 3 | 6,00 | | | 1,67 | | 0,008 | |
| 4 | 6,00 | | 0,81 | | | 0,008 | |
| 5 | | 7,48 | | | 1,00 | 0,008 | |
| 6 | 6,00 | | | 1,67 | | | 0,006 |

Tabelle II zeigt die Ergebnisse aus den Vergleichsbeispielen 1 -6. Die Produktionsrate (PR2) ist in mg Silan / m$^2$·min angegeben. Die Konzentrationen von $Me_2SiCl_2$ im Rohsilan und die Konzentration von $Me_2SiCl_2$ im Rohsilan - normiert auf 0 Gew.-% $HSiMeCl_2$ (A) sind in Gew.% angegeben. Beim Beispiel 4 wurde die Produktionsphase innerhalb 3 Stunden Reaktionszeit nicht erreicht.

| Beispiel | PR2 | % $Me_2SiCl_2$ | A |
|----------|-------|----------------|------|
| 1 | 100,1 | 87,9 | 89,1 |
| 2 | 104,2 | 82,3 | 83,2 |
| 3 | 141,8 | 78,0 | 81,5 |
| 4 | 0,0 | -- | -- |
| 5 | 134,8 | 84,3 | 86,0 |
| 6 | 107,2 | 77,0 | 79,0 |

Vergleichsbeispiel 7 (nicht erfindungsgemäß):

Der Nachweis wird erbracht, daß beim Einsatz von t-Butylchlorid, eine Modellsubstanz für die Aktivierung mit t-Alkylhalogeniden, die aktivierende Wirkung im Vergleich zu den erfindungsgemäßen Aktivatoren geringer ist, und daß unerwünschte neue Silane wie auch unumgesetztes t-Butylchlorid im Rohsilan enthalten sind.

| Katalysator | 6,00 g | $CuO_{0,9}$ |
|-------------|---------|-------------|
| | 1,00 g | ZnO |
| | 0,008 g | Sn |

Aktivator:

0,30 l/h t-Butylchlorid (gasförmig) während des gesamten Reaktionsverlaufes mit dem Methylchlorid einge-blasen.

| PR2 | 133,5 |
|---|---|
| $Me_2SiCl_2$ | 82,4 % |

Im $^1$H-NMR Spektrum des Rohsilans konnten zu ca. 1 % t-Butylsilane wie auch t-Butylchlorid nachgewiesen werden.

Beispiele 1 - 4

| Katalysator | 6,00 g | $CuO_{0,9}$ |
|---|---|---|
| | 1,00 g | ZnO |
| | 0,008 g | Sn |

Aktivator:

Methyldichlorsilan, während des gesamten Reaktionsverlaufes mit dem Methylchlorid eingeblasen. (A = Gew.-% an $Me_2SiCl_2$ im Rohsilan, normiert auf 0 % $HMeSiCl_2$).

Tabelle III

| Beispiel | l/h $HMeSiCl_2$-gasförmig | PR2 | Gew.-% $Me_2SiCl_2$ | A |
|---|---|---|---|---|
| 1 | 0,33 | 151,7 | 85,4 | 90,0 |
| 2 | 0,50 | 156,4 | 82,1 | 89,9 |
| 3 | 0,75 | 153,6 | 76,1 | 86,7 |
| 4 | 1,10 | 154,4 | 74,0 | 85,3 |

Beispiele 5 - 7

Analog Beispiel 1 mit dem Unterschied, daß die $HMeSiCl_2$-Dosierung gestoppt wurde sobald sich R ml Rohsilan gebildet haben und im Anschluß daran die Reaktion mit reinem Methylchlorid weitergefahren wurde.

Tabelle IV

| Beispiel | R[ml] | PR2 | Gew.-% $Me_2SiCl_2$ | A |
|---|---|---|---|---|
| 5 | 2 | 149,6 | 87,0 | 89,4 |
| 6 | 10 | 154,7 | 85,9 | 87,4 |
| 7 | 0,05 | 148,6 | 84,1 | 86,0 |

Beispiele 8 - 9

Analog Beispiel 1 mit dem Unterschied, daß 1,1,2,2-Tetramethyldichlorsilan als Aktivator eingesetzt wurde.

Tabelle V

| Beispiel | l/h $(Me_2ClSi)_2$ gasförmig | PR2 | Gew.-% $Me_2SiCl_2$ | A |
|---|---|---|---|---|
| 8 | 0,34 | 136,8 | 82,9 | 83,7 |
| 9 | 0,43 | 136,0 | 81,4 | 82,2 |

Beispiel 10

| Katalysator | 6,00 g | $CuO_{0,9}$ |
|---|---|---|
| | 1,67 g | $ZnCl_2$ |
| | 0,008 g | Sn |

Aktivator:

0,35 l/h gasförmiges Methyldichlorsilan wurden während des gesamten Reaktionsverlaufs mit dem Methylchlorid in den Reaktor eingeblasen.
PR2 = 147,5; Gew.-% $Me_2SiCl$ = 76,9 %
Gew.% $Me_2SiCl_2$ normiert auf 0 % $HMeSiCl_2$ = 81,1 %

Beispiel 11

| Katalysator | 6,00 g | $CuO_{0,9}$ |
|---|---|---|
| | 1,00 g | ZnO |
| | 0,006 g | Sb |

Aktivator:

0,59 l/h gasförmiges Methyldichlorsilan wurden während des gesamten Reaktionsverlaufes mit dem Methylchlorid in den Reaktor eingeblasen.
PR2 = 138,4; Gew.% $Me_2SiCl_2$ = 63,7 %
Gew.% $Me_2SiCl_2$ normiert auf 0 % $HMeSiCl_2$ = 78,2 %

Beispiele 12 - 16

Katalysator und Aktivator sind in der Tabelle VI angegeben

Tabelle VI

| Bsp. | CuO$_{0,9}$ g | CuCl g | ZnO g | Zn g | Sb g | Sn g | HSiCl$_3$ 1/h | HMeSiCl$_2$ 1/h | Me$_2$SiCl$_2$ 1/h |
|---|---|---|---|---|---|---|---|---|---|
| 12 | 6,00 | | 1,00 | | | 0,008 | 0,88 | | |
| 13 | 6,00 | | 1,00 | | 0,006 | | | 0,72 | |
| 14 | 6,00 | | | 0,81 | | 0,008 | | | 0,51 |
| 15 | 6,00 | | | 0,81 | | 0,008 | 1,01 | | |
| 16 | | 7,48 | 1,00 | | | 0,008 | | 1,52 | |

Die Aktivatordosierung wurde gestoppt sobald sich 10 ml Rohsilan gebildet hatten. Im Anschluß daran wurde die Reaktion mit reinem Methylchlorid fortgesetzt. Die Ergebnisse sind in Tabelle VII aufgeführt.

| Beispiel | PR2 | Gew.% Me$_2$SiCl$_2$ | A |
|---|---|---|---|
| 12 | 149,0 | 85,3 | 87,0 |

(fortgesetzt)

| Beispiel | PR2 | Gew.% $Me_2SiCl_2$ | A |
|---|---|---|---|
| 13 | 176,6 | 82,6 | 84,7 |
| 14 | 136,3 | 86,9 | 88,2 |
| 15 | 165,1 | 88,4 | 89,7 |
| 16 | 256,4 | 84,1 | 87,1 |

Beispiel 17

| Katalysator | 6,00 g | $CuO_{0,9}$ |
|---|---|---|
| | 0,81 g | Zn |
| | 0,008 g | Sn |

Aktivator:

0,45 1/h gasförmiges Dimethyldichlorsilan wurde während des gesamten Reaktionsverlaufes mit dem Methylchlorid in den Reaktor eingeblasen.
PR2 = 120,5; Gew.% $Me_2SiCl_2$ = 88,1%
Gew.% $Me_2SiCl_2$ normiert auf 0 % $HMeSiCl_2$ = 89,1 %

Beispiel 18

| Katalysator | 6,00g | $CuO_{0,9}$ |
|---|---|---|
| | 1,67 g | $ZnCl_2$ |
| | 0,006 g | Sb |

Aktivator:

0,53 l/h gasförmiges Methyldichlorsilan wurde während des gesamten Reaktionsverlaufes mit dem Methylchlorid in den Reaktor eingeblasen.
PR2 = 134,4; Gew.% $Me_2SiCl_2$ = 75,5 %
Gew% $Me_2SiCl_2$ normiert auf 0 % $HMeSiCl_2$ = 80,1 %

Beispiel 19, Vergleichsbeispiel 8

| Katalysator | 6,00 g | $CuO_{0,9}$ |
|---|---|---|
| | 1,00 g | ZnO |
| | 0,008 g | Sn |

Aktivator:

Im Vergleichsbeispiel 8 wurde kein Aktivator zugesetzt, im Beispiel 19 wurden 0,58 l/h gasförmiges Methyldichlorsilan so lange dem Methylchlorid zugesetzt bis sich 10 ml Rohsilan gebildet hatte. Anschließend wurde die Reaktion mit reinem Methylchlorid fortgesetzt.

Beispiele 20 - 22

| Katalysator | 6,00 g $CuO_{0,9}$ |
|---|---|
| | 1,00 g ZnO |
| | 0,008 g Sn |

Aktivator:

Dimethyldichlorsilan während des gesamten Reaktionsverlaufes mit Methylchlorid in den Reaktor eingeblasen.

<center>Tabelle IX</center>

| Beispiel | l/h $Me_2SiCl_2$ gasförmig | PR2 | Gew.% $Me_2SiCl_2$ |
|---|---|---|---|
| 20 | 0,21 | 135,2 | 88,1 |
| 21 | 0,35 | 139,0 | 90,1 |
| 22 | 0,47 | 141,4 | 91,3 |

Beispiel 23

| Katalysator | 6,00 g | $CuO_{0,9}$ |
|---|---|---|
| | 1,00 g | ZnO |
| | 0,008 g | Sn |

Aktivator:

0,30 l/h gasförmiges Trimethylchlorsilan wurde während des gesamten Reaktionsverlaufs mit dem Methylchlorid in den Reaktor eingeblasen.
PR2 = 135,5; Gew.% $Me_2SiCl_2$ = 86,9 %

**Patentansprüche**

1. Verfahren zur Herstellung von Dimethyldichlorsilan durch Umsetzung von Chlormethan mit Silicium in Gegenwart einer Katalysatorkombination aus den Metallen oder Verbindungen der Metalle

    a) Kupfer,
    b) Zink und
    c) Zinn und/oder Antimon,

bei dem Aktivatoren eingespeist werden, die ausgewählt werden aus Chlorsilanen der allgemeinen Formel (I)

$$(H_3C)_a SiH_b Cl_c \qquad (I),$$

in der

    a und b unabhängig voneinander die Werte 0, 1, 2 oder 3 und
    c die Werte 1, 2, 3 oder 4 bedeuten,

und aus Chlordisilanen der allgemeinen Formel (II)

$$(H_3C)_d H_e Cl_f Si\text{-}Si(H_3C)_g H_h Cl_i \qquad (II),$$

in der

d und e unabhängig voneinander die Werte 0, 1 oder 2,
f die Werte 1, 2 oder 3 und
g, h und i unabhängig voneinander die Werte 0, 1, 2 oder 3 bedeuten, mit der Maßgabe, daß das in den Reaktor eingespeiste Gas höchstens 15 Volumen-% Wasserstoff enthält.

2. Verfahren nach Anspruch 1, bei dem das in den Reaktor eingespeiste Gas mindestens 0,05, Volumen-% Aktivator, berechnet als gasförmiger Aktivator enthält.

3. Verfahren nach Anspruch 1 oder 2, bei dem 0,5 bis 10 Gew.-%, Kupferkatalysator, bezogen auf metallisches Kupfer und eingesetztes Silicium verwendet werden.

4. Verfahren nach einem der Ansprüche 1 bis 3, bei dem 0,5 bis 60 Gew.-% Zn, bezogen auf Kupfer verwendet werden.

5. Verfahren nach einem der Ansprüche 1 bis 4, bei dem 200 bis 8000 ppm Antimon und/oder Zinn, bezogen auf das eingesetzte Kupfer verwendet werden.

6. Verfahren nach einem der Ansprüche 1 bis 5, bei dem als Aktivatoren Methyltrichlorsilan, Methyldichlorsilan oder Dimethyldichlorsilan eingesetzt werden.

**Claims**

1. Process for preparing dimethyldichlorosilane by reacting chloromethane with silicon in the presence of a catalyst combination of the metals or components of the metals

a) copper,
b) zinc and
c) tin and/or antimony,

wherein activators selected from the group consisting of chlorosilanes of the general formula (I)

$$(H_3C)_a SiH_b Cl_c \qquad (I),$$

where

a and b are, independently of one another, 0, 1, 2 or 3 and
c is 1, 2, 3 or 4,

and chlorodisilanes of the general formula (II)

$$(H_3C)_d H_e Cl_f Si\text{-}Si(H_3C)_g H_h Cl_i \qquad (II),$$

where

d and e are, independently of one another, 0, 1 or 2,
f is 1, 2 or 3 and
g, h and i are, independently of one another, 0, 1, 2 or 3,

are fed in, with the proviso that the gas fed into the reactor contains at most 15 % by volume of hydrogen.

2. Process according to Claim 1, wherein the gas fed into the reactor contains at least 0.05 % by volume of activator, calculated as gaseous activator.

3. Process according to Claim 1 or 2, wherein from 0.5 to 10 % by weight of copper catalyst, based on metallic copper and silicon used, are used.

4. Process according to any of Claims 1 to 3, wherein from 0.5 to 60 % by weight of Zn, based on copper, are used.

5. Process according to any of Claims 1 to 4, wherein from 200 to 8000 ppm of antimony and/or tin, based on the copper used, are used.

6. Process according to any of Claims 1 to 5, wherein methyltrichlorosilane, methyldichlorosilane or dimethyldichlorosilane are used as activators.

**Revendications**

1. Procédé de préparation de diméthyldichlorosilane par réaction de chlorométhane avec du silicium en présence d'une combinaison de catalyseurs à base des métaux ou de composés des métaux

   a) cuivre,
   b) zinc et
   c) étain et/ou antimoine,

dans lequel on charge des activateurs qui sont choisis parmi des chlorosilanes de formule générale (I)

$$(H_3C)_aSiH_bCl_c \qquad \text{(I)},$$

dans laquelle

   a et b représentent, indépendamment l'un de l'autre, les valeurs 0, 1, 2 ou 3 et
   c représente les valeurs 1, 2, 3 ou 4,

et parmi des chlorodisilanes de formule générale (II)

$$(H_3C)_dH_eCl_fSi\text{-}Si(H_3C)_gH_hCl_i \qquad \text{(II)},$$

dans laquelle

   d et e représentent, indépendamment l'un de l'autre, les valeurs 0, 1 ou 2,
   f représente les valeurs 1, 2 ou 3 et
   g, h et i représentent, indépendamment les uns des autres, les valeurs 0, 1, 2 ou 3,

à condition que le gaz chargé dans le réacteur comprenne au plus 15% en volume d'hydrogène.

2. Procédé selon la revendication 1, dans lequel le gaz chargé dans le réacteur comprend au moins 0,05% en volume d'activateur, calculé en tant qu'activateur gazeux.

3. Procédé selon la revendication 1 ou 2, dans lequel on utilise de 0,5 à 10% en poids de catalyseur au cuivre, par rapport au cuivre métallique et au silicium utilisé.

4. Procédé selon l'une quelconque des revendications 1 à 3, dans lequel on utilise de 0,5 à 60% en poids de Zn, par rapport au cuivre.

5. Procédé selon l'une quelconque des revendications 1 à 4, dans lequel on utilise de 200 à 8000 ppm d'antimoine et/ou d'étain, par rapport au cuivre utilisé.

6. Procédé selon l'une quelconque des revendications 1 à 5, dans lequel on utilise, en tant qu'activateurs, le méthyltrichlorosilane, le méthyldichlorosilane ou le diméthyldichlorosilane.